# EUROPÄISCHE PATENTSCHRIFT

(11) **EP 0 732 183 B1**
(45) Veröffentlichungstag und Bekanntmachung des Hinweises auf die Patenterteilung: **08.05.2002**
(21) Anmeldenummer: 96890042.3
(22) Anmeldetag: 11.03.1996
(51) Int. Cl.: B29C 43/22

(54) **Vorrichtung und Verfahren zum kontinuierlichen Herstellen von Folien, Bahnen oder Platten**
Apparatus and process for the continuous manufacturing of films, webs or sheets
Appareil et procédé pour la fabrication en continu de films, bandes ou plaques

(30) Priorität: 14.03.1995 AT 44795
(43) Veröffentlichungstag der Anmeldung: 18.09.1996
(73) Patentinhaber: BERNDORF BAND GesmbH, A-2560 Berndorf (AT)
(72) Erfinder:
(74) Vertreter: Widtmann, Georg, Dipl.-Ing. Dr. techn.

(56) Entgegenhaltungen:
- EP-A- 0 212 232
- DE-A- 2 404 523
- DE-A- 2 432 778
- DE-A- 3 300 251
- US-A- 3 932 921
- US-A- 4 090 282
- US-A- 5 352 321

## Beschreibung

Gegenstand der Erfindung ist eine Vorrichtung und ein Verfahren zum kontinuierlichen Herstellen von, insbesondere planparallen, flächigen Folien, Bahnen oder Platten mit einer plastischen Masse, z. B. Kunststoff.

Bei der Formung von plastischen Massen zu beliebig langen Folien, Bahnen oder Platten müssen die Vorrichtungen besonders an die chemisch-physikalischen Vorgänge angepaßt sein. Die Massen wurden in plastischer Form in die Vorrichtung eingebracht und verlassen dann dieselbe als im wesentlichen fertige Folie, Bahn oder Platte, wobei die Temperatur derselben aus Gründen der Fertigungsgeschwindigkeit unterschiedlich gegenüber der Raumtemperatur ist. Bei der kontinuierlichen Fertigung von Folien, Bahnen und Platten ist zu berücksichtigen, daß die Verfestigung der plastischen Massen einen endothermen oder exothermen Vorgang darstellen kann, und daß weiters während der Verfestigung auch Phasenumwandlungen stattfinden können, die einen Haltepunkt oder Knick in der Temperatur/Zeitkurve darstellen. Wird nun eine thermoplastische Masse in einen Walzenspalt eingebracht, so tritt in der Regel eine Abkühlung der beiden Bereiche, die an den jeweiligen Walzen anliegen, ein und eine Verfestigung auf. Zwischen diesen beiden äußeren Schichten ist der Kunststoff noch flüssig oder plastisch und wird aus dem Spalt zwischen den beiden erstarrten äußeren Schichten herausgequetscht. Mit fortschreitender Abkühlung der Bahn tritt nicht nur, je nach dem, welcher Kunststoff zum Einsatz gelangt, ein Phasenwechsel auf, sondern es wird gleichzeitig mit der Abkühlung eine Abnahme der Dicke der Folie, Bahn oder der Platte entsprechend dem thermischen Ausdehnungskoeffizienten stattfinden. Neben diesen auftretenden Effekten ist noch zu berücksichtigen, daß gegebenenfalls die den Spalt verlassende Bahn od. dgl. noch nicht über die ausreichende Festigkeit verfügt, um selbsttragend zu sein und somit einer Stützung bedarf.

Die angeführten Voraussetzungen legen dar, welchen komplexen Anforderungen eine Vorrichtung zur Herstellung von beliebig langen Bahnen oder Platten aus plastischen Massen unterliegt, wenn dieselben eine besonders hohe Güte sowohl in der Oberflächenbeschaffenheit als auch in der Dicke aufweisen sollen.

Aus der EP-A-0 461 488 wird eine Vorrichtung zur Herstellung geglättet extrudierter Vollplatten oder Folien mit weniger als 1 mm Dicke bekannt. Der thermoplastische Kunststoff wird hierbei in den Spalt eines Glättwerkes extrudiert, welches eine Oberwalze und eine Unterwalze aufweist. Die Unterwalze dient als Umlenkrolle für ein endloses Band, das über eine Antriebswalze bewegt wird. Das Band hat hierbei die Aufgabe, einerseits als Oberfläche für die Unterwalze des Glättwerkes zur Verfügung zu stehen und andererseits als Träger für die noch nicht erhärtete thermoplastische Bahn zu dienen. Die Bildung der Oberfläche wird, wie bekannt, lediglich in einem Walzenspalt durchgeführt, so daß nach Bildung der beiden Randschichten, welche an der Oberwalze bzw. am Band anliegen, keine zusätzliche mechanische Beeinflussung der Oberflächen erfolgt.

In der US-A-5,352,321 wird eine Doppelbandanlage beschrieben, die insbesondere zur Herstelung von Spanplatten dienen soll. Die Bänder werden an Antriebs- und Umlenkrollen umgelenkt. Jede Antriebsrolle weist einen eigenen Motor auf.

Aus der EP-A-0 484 721 wird eine Vorrichtung zur Extrusion von Hohlkammerplatten aus thermoplastischem Kunststoff bekannt.

Diese Vorrichtung weist drei Glättwerke auf, und zwar ein oberes Glättwerk, das eine obere kleinere Walze besitzt, die mit einer oberen Umlenkrolle eines Doppelbandkühlers kooperiert. Eine analoge Ausbildung ist für ein unteres Glättwerk vorgesehen, wobei die jeweils aus Schlitzdüsen austretenden thermoplastischenPlatten vom oberen Band bzw. unteren Band umgelenkt werden. Die obere extrudierte Platte haftet am oberen Band, und die untere extrudierte Platte haftet am unteren Band. In den Zwischenraum werden über einen weiteren Extruder, der in den Walzenspalt zwischen oberer und unterer Umlenkrolle extrudiert, Stege eingebracht. Die Platten werden in ihrer geometrischen Ausbildung, wie Dicke und Oberflächenbeschaffenheit, im wesentlichen durch das obere und untere Glättwerk bestimmt.

In der DE-A-24 32 778 wird ein Verfahren und eine Vorrichtung zum Herstellen von extrudierten Folien beschrieben. Es wird hierbei das thermoplastische Material zwischen zwei endlosen Bändern extrudiert. Das eintretende Material weist eine wesentlich geringere Breite als die Bänder auf. Die Bänder bilden einen langverlaufenden konischen Spalt, innerhalb welchem das thermoplastische Material nicht nur längs der Bandbewegungsrichtung, sondern auch quer zu derselben bewegt wird, so daß das Material erst auf dem Band im wesentlichen zur gesamten Breite desselben verteilt wird. Die beiden Bänder dienen somit auch dazu, das aus einem Extruder austretenden Extrudat auf die erwünschte Quererstreckung zu verbreiten. Nachdem diese Verbreiterung stattgefunden hat, kann durch zusätzlich übereinander angeordnete Walzen, durch welche die Bänder gegeneinander gehalten werden, ein Glättwerk gebildet werden, das sich am Ende der Doppelbandanlage befindet. An diesem Ort ist die Verfestigung der Folie bereits abgeschlossen und es liegt keine flüssige Zwischenschichte vor, so daß zwar ein Glätten nicht jedoch eine wirksame plastische Verformung eintritt, sondern es liegt eine elastische Verformung vor. Die Abstände der Rollen des Glättwerkes zueinander als auch die Abstände der Bänder zueinander ist einstellbar. Die Rollen im Bereich des Einlaufes des Extrudates sind heizbar, wohingegen die Bänder ebenfalls temperierbar sind. Eine derartige Einrichtung weist den Nachteil auf, daß lange Einlaufspalte vorgesehen werden müssen, welche einen überwiegenden Teil der Bandlänge beanspruchen. Auch treten mit der Verbreiterung des Extrudates wellenförmige Unregelmäßigkeiten der Oberfläche auf, die auf Grund der ungleichmäßigen Abkühlung bedingt sind. Bei optisch nicht leeren Folien, Platten od. dgl. kommt es zu unterschiedlicher Absorption des Lichtes, die als Wolkenbildung zu erkennen ist. Eine derartige Vorrichtung bedingt somit übermäßig lange Bänder und gleichzeitig ein Produkt, das nicht den erwünschten optischen Eigenschaften gerecht wird, wobei weiters ungleichmäßige Dicken auf Grund von ballig ausgebildeten Rollen bedingt werden.

Aus der DE-A-38 16 855 von welchem Stand der Technik die Erfindung ausgeht, wird eine Vorrichtung zur Herstellung von kratzfesten Kunststoffbahnen bekannt, bei welchen ein oberes und unteres endloses Band aus Stahl mit Umlenk- und Antriebsrollen vorgesehen sind. In dem Walzenspalt zwischen dem oberen und unteren Stahlband im Bereich der Umlenkwalzen wird aus einem Extruder mit einer Schlitzdüse ein Band über die Breite der endlosen Bänder extrudiert. Dieses Band gelangt zusätzlich zur Beschichtung, wobei das zu beschichtende Material auf der oberen Außenseite des oberen endlosen Bandes aufgebracht wird, und bei der Umkehrung des endlosen Bandes im Bereich der Umlenkrolle direkt an dem extrudierten Produktstrang zum Anliegen kommt. Bei dieser Vorrichtung wird die Dimensionierung des Produktstranges im wesentlichen durch die Schlitzdüse des Extruders bestimmt, da keine weitere Dickenabnahme des Produktstranges zwischen den Bändern erfolgt.

Der Erfindung ist zur Aufgabe gesetzt, eine Vorrichtung zu schaffen, welche zur Herstellung von beliebig langen Folien, Bahnen oder beliebig langen Platten aus thermoplastischem oder duroplastischem Kunststoff geeignet ist, und deren Dicke mit besonders hoher Genauigkeit eingehalten werden kann, wobei eine schockartige Temperaturänderung, insbesondere Abkühlung, des bereits bandförmig vorliegenden Materials vermieden werden kann, und der spezifischen Abkühlung einer beliebig langen Folie, Bahn oder Platte, u. zw., daß die oberen und unteren Grenzschichten der Bahn als erste erhärten und ein nach hinten zur Extrusionseinrichtung offener flüssiger Kern vorliegt, besonders vorteilhaft Rechnung getragen wird. Weiters soll durch die Vorrichtung auch der Kontraktion auf Grund des thermischen Ausdehnungskoeffizienten während des Kühlvorganges Rechnung getragen sein.

Die erfindungsgemäße Vorrichtung zum kontinuierlichen Herstellen von, insbesondere planparallelen, flächigen beliebig langen Folien, Bahnen oder Platten mit einer plastischen Masse, z. B. Kunststoff, welche mit Temperaturänderung verfestigt, mit zumindest einem unteren und zumindest einem oberen endlosen durchbrechungsfreien Band, insbesondere aus Stahl, einem von diesen gebildeten formenden und/oder temperierenden Bereich, jeweils mit Antriebs- und Umlenkrollen, Temperiereinrichtung, welche am unteren und oberen Band sowie vorzugsweise an den Umlenk- und/oder Antriebsrollen angreifen, einer Speiseeinrichtung, die einen Schlitz, insbesondere eine Schlitzdüse, aufweist, insbesondere Extruder, über welche die plastische Masse in einen Einlaufspalt zwischen die Bänder über deren Breite speisbar ist und einer Einrichtung zur Einstellung des Normalabstandes der Bänder zueinander, insbesondere über die Antriebs- und/oder Umlenkrollen, besteht im wesentlichen darin, daß zwischen Antriebs- und Umlenkrolle zumindest je eine am oberen oder unteren Band in dem vorzugsweise formenden und/oder temperierenden Bereich an der der Masse formenden Seite abgewandten Seite drehbare Kalibrierrollen vorgesehen ist/sind, und der Abstand der Bänder zueinander im Bereich der drehbaren Kalibrierrollen geringer ist als der Abstand der Bänder des Einlaufspaltes im Bereich zwischen den Antriebs- oder Umlenkrollen, welche jeweils zumindest einen eigenen Antriebsmotor aufweisen.

Dadurch, daß sowohl ein oberes als auch ein unteres endloses Band vorgesehen ist, das entsprechend der Geschwindigkeit der in den Walzenspalt eingebrachten Masse bewegbar ist, kann entlang des gesamten Berührungsweges eine temperaturmäßige Beaufschlagung des Massestranges durchgeführt werden, wobei auf Grund der größeren Strecke schockartige Temperatureinwirkungen, insbesondere Abkühlungen, die zu inhomogenen Hautbildungen führen, welche sodann zu Unregelmäßigkeiten an der Oberfläche führen, vermeidbar sind. Dadurch, daß nach dem Einlaufspalt in Bewegungsrichtung der plastischen Massen gesehen, welcher durch die Bänder, die von den Rollen getragen sind, gebildet ist, zumindest eine Kalibrierrolle angeordnet ist, wobei in diesem Bereich der Abstand der Bänder zueinander geringer ist als im Bereich der Antriebs- bzw. Umlenkrollen, kann bereits eine Kalibrierung des Materialstranges durchgeführt werden, wobei obere und untere Grenzschichten des Materials zwar abgekühlt oder erhitzt, jedoch noch nicht in ihrer Struktur so verfestigt sind, daß es im Bereich der Kalibrierrolle zu unregelmäßigen Oberflächenausbildungen der Grenzschichte gelangt. Weist jede Antriebsrolle zumindest einen eigenen Antriebsmotor auf, so kann die Bewegungsgeschwindigkeit der Bänder unabhängig voneinander besonders einfach und wirksam geregelt werden.

Sind zumindest eine obere drehbare Kalibrierrolle, die am oberen Band angreift und eine untere drehbare Kalibrierrolle, die am unteren Band angreift, vorgesehen, welche Kalibrierrollen, insbesondere ihre entsprechenden Achsen senkrecht, zur Bandbewegungsrichtung übereinander angeordnet sind, so kann der Spalt zwischen den Kalibrierrollen und damit zwischen dem oberen und unteren Band im Bereich der Kalibrierrollen mit besonders hoher Genauigkeit eingestellt werden, wobei die Belastung der Bänder und damit die Abnützung derselben mit einfachen konstruktiven Maßnahmen besonders gering gehalten werden können. Weiters wird dadurch der Vorteil erreicht, daß auch im Bereich der Kalibrierwalzen eine gleichförmige Bewegung der Bänder erreichbar ist, so daß Oberflächenbeschaffenheiten der zu erzeugenden Platten oder Bahnen, die Querstreifen aufweisen, auf Grund von geringfügig unterschiedlichen Bandgeschwindigkeiten in der Hauptbewegungsrichtung des Bandes, vermieden werden können.

Ist zumindest eine, sind insbesondere alle, Kalibrierrolle(n) synchron zur jeweiligen Bandgeschwindigkeit antreibbar, so kann eine Relativgeschwindigkeit zwischen Kalibrierrollen und Band, wie dies bedingt ist, wenn die Rollen durch das Band unmittelbar bewegt werden, vermieden, so daß einerseits Abweichungen von der planen Oberfläche im Bereich der Kalibrierrollen vermieden werden können und gleichzeitig Reibung, die durch die Relativgeschwindigkeit zwischen Kalibrierrollen und Band bedingt sind, nicht auftreten.

Weisen die Kalibrierrollen einen Hohlraum um die Achse dieser rotationssymmetrisch ausgebildet mit einem inneren Mantel auf, in welchem Hohlraum Druckelemente drehfest angeordnet sind, die an dem inneren Mantel in Richtung zum Band oder umgekehrt angreifen, so kann durch die quer zur Achse angeordneten Druckelemente eine erwünschte Berührungslinie, insbesondere eine Gerade, der Kalibrierrolle erhalten werden, da Durchbiegungen od. dgl., wie sie durch die Druckeinwirkung der Kalibrierrollen auf die endlosen Bänder bedingt sind, einer Adaptierung unterworfen werden können, womit ein besonders planparalleles Produkt erhaltbar ist.

Sind die Druckelemente schwenkbar angeordnet, so kann die Deformation der Kalibrierrollen auch mit der Umdrehgeschwindigkeit abgestimmt werden.

Sind die Druckelemente über ein Fluid, insbesondere über eine Flüssigkeit, zur Krafteinwirkung gegen oder von der Kalibrierrolle einstellbar, so kann ein Nachstellen der Druckelemente gegen den inneren Mantel der Kalibrierrolle unter Berücksichtigung der Deformation derselben erfolgen, so daß eine besonders genaue Krafteinwirkung der Druckelemente und damit besonders genaue erwünschte Einstellung der äußeren Kontur der Kalibrierrolle ermöglicht ist.

Weisen die Druckelemente zumindest eine, insbesondere mehrere, Austrittsöffnungen für ein Fluid auf, die in Richtung, insbesondere zur benachbarten Fläche, des inneren Mantels der Kalibrierrolle gerichtet ist/sind, so kann zwischen Druckelementen und innerer Oberfläche eine den Druck übertragende Fluidschichte aufgebaut, die gleichzeitig den Druck oder Unterdruck auf die innere Oberfläche der Kalibrierwalze ausüben kann.

Weisen die Achsen der Kalibrierrollen eine Stelleinrichtung auf, über welche die Kalibrierrollen unabhängig von der Einrichtung zur Einstellung des Normalabstandes der Bänder zueinander betätigbar sind und eine windschiefe Einstellung der Achsen zueinander ermöglicht, so kann mit ein und derselben Einrichtung die Herstellung von Folien, Bahnen und Platten aus unterschiedlichsten Materialien und gleichzeitig mit unterschiedlicher Dichte und Dicke unabhängig von der Haupteinstellung der Einrichtung, u. zw. des Abstandes der Umlenkrollen bzw. Antriebsrollen zueinander, erfolgen, womit ein besonders hoher Einsatzbereich einer Vorrichtung gegeben ist.

Weist die Temperiereinrichtung Austrittsöffnungen, die zum Band an der die Masse beaufschlagenden Seite abgewandten Seite gerichtet sind, und, insbesondere diese umschließende, Abströmöffnungen, für ein Wärmeträgerfluid, insbesondere Luft, auf, so ist eine besonders wirksame Einrichtung zur Temperierung gegeben, die auf Grund der geringen Massen eine geringe thermische Trägheit aufweist, so daß eine genaue Einhaltung des erwünschten Temperaturgradienten besonders wirksam ermöglicht ist.

Ist/sind eine Vielfalt von Austrittsöffnungen über Leitungen mit einem das Fluid temperierenden Wärmetauscher und eine weitere Vielzahl von Abströmöffnungen über Leitungen verbunden, so kann entlang des Bandes durch unterschiedliche Temperaturen des Wärmetauscherfluides ein bestimmter Wärmegradient einfach und wirksam eingestellt werden, wobei mit Luft als Wärmetauscherfluid eine Verunreinigung sowohl der Einrichtung als auch des Produktes besonders einfach vermeidbar ist, und eine zustätzliche Belastung des Bedienungspersonals nicht durch weitere Absaugungen u. dgl. vermieden werden muß.

Das erfindungsgemäße Verfahren zum kontinuierlichen Herstellen von, insbesondere planparallel, flächigen beliebig langen Folien, Bahnen od. Platten, wobei eine plastische Masse in einen mit einem oberen und einem unteren endlosen Band sowie Umlenkund Antriebsrollen, welche Bänder in gleiche Richtung bewegt werden, gebildeten Einlaufspalt über dessen Breite eingebracht, zwischen den Bändern in ihrer Dicke reduziert und temperiert, gegebenenfalls gekühlt, werden, die Dicke der Folien, Bahnen od. Platten gemessen und der Abstand der Bänder zueinander eingestellt wird, besteht im wesentlichen darin, daß zumindest ein, insbesondere beide, Bänder an annähernd übereinander angeordneten Kalibrierrollen abgelenkt werden, die zwischen den Umlenk- und Antriebsrollen angeordnet sind, und zumindest eine, insbesondere beide, drehbare Kalibirierrolle(n) über im Inneren derselben angeordneten Saug- und/oder Druckelemente entlang einer Erzeugenden deformierbar sind. Durch die oberen und unteren endlosen Bänder, insbesondere aus Stahl, kann mit der Bewegung eine materialspezifische thermische Behandlung und Dickenreduktion der plastischen Massen durchgeführt werden. Mit der zusätzlichen Dickenreduzierung der plastischen Massen über die Kalibrierrollen und Bänder kann eine zusätzliche genaue Nacheinstellung der Folien, Bahnen od. Platten erfolgen, wobei durch die im Inneren der Kalibrierrollen angeordneten Saug- und Druckelemente eine Kompensation der Deformierung der Walzen, welche durch die Druckausübung der Bänder und die plastischen Massen hervorgerufen wird, wirksam kompensiert werden kann.

Wird der Abstand der Bänder quer zur Laufrichtung nach den Kalibrierrollen an mehreren Stellen gemessen und bei der Abweichung von Soll-Werten die Druckbeaufschlagung durch die Saug- und/oder Druckelemente geändert, so ist ein besonders kurzzeitig wirkendes Verfahren gegeben. Durch den Abstand der Bänder zueinander wird die Dicke des zu fertigenden Materials, u. zw. auch quer zur Bandlängsrichtung definiert, wobei durch die Messung der Ist-Werte möglichst nahe der Walzen Störungen bereits nach sehr kurzen Laufstrecken hinter den Kalibrierwalzen erfaßt werden können und nicht erst nach Verlassen der Materialbahn aus dem Doppelbandkalibrator ermittelt werden.

Wird die Dicke der flächigen beliebig langen Folien, Bahnen od. Platten nach dem Austritt derselben aus den Bändern quer zur Bewegungsrichtung der Bänder gemessen und bei Abweichung von Soll-Werten der Abstand der Kalibrierrollen und/oder die Druckbeaufschlagung durch die Saug- und/oder Druckelemente geändert, so erfolgt die Steuerung oder Regelung in direkter Abhängigkeit von der Stärke des zu erzeugenden Produktes, wobei sämtliche Änderungen innerhalb der Doppelbandvorrichtung bereits integrativ berücksichtigt sind.

Werden die Ist-Werte der Dicke an prädestinierten Stellen über die Zeit, insbesondere über 5 bis 10 Sekunden, integriert und sodann mit einem Soll-Wert verglichen und bei Abweichung der Abstand der Kalibrierrollen und/oder die Druckbeaufschlagung durch die Saug- und/oder Druckelemente geändert, so kann eine kontinuierliche Fertigung durchgeführt werden, die nicht durch geringe Inhomogenitäten in Temperaturführung, Materialzusam mensetzung u. dgl. gestört ist, sondern nur längerfristige Einwirkungen eine entsprechende Steuerung bedingt.

Werden die Ist-Werte der Temperatur der Bänder längs der Bewegungsrichtung der Bänder bestimmt und mit Soll-Werten verglichen und wird bei Abweichung die Wärme- und/oder Kühlbeaufschlagung der Bänder und/oder Umlenk- und/oder Antriebswalzen geändert, so kann selbst bei Produkten mit hoher Abhängigkeit der Viskosität von der Temperatur als auch einem hohen Wärmedehnkoeffizienten eine besonders ausgeglichene Materialqualität, insbesondere der Dicke als auch der optischen Beschaffenheit, erreicht werden.

Werden die Ist-Werte der Temperatur der Bänder quer zur Bewegungsrichtung der Bänder bestimmt und mit Soll-Werten verglichen und bei Abweichung die Wärme- und/oder Kühlbeaufschlagung der Bänder und/oder Umlenk- und/oder Antriebswalzen geändert, so kann den Randeffekten sowohl bei den Bändern als auch bei den Walzen, die einer bevorzugten Temperaturveränderung gegenüber den Innenbereichen der Walzen und Bänder unterliegen, besonders vorteilhaft Rechnung getragen werden, da die thermische Beanspruchung in diesen Randbereichen auf besondere Weise durch Zuführung von einer größeren Menge des temperierenden Mediums oder auch eine erhöhte oder erniedrigte Temperatur gegenüber dem Medium, das im Mittelbereich der Bänder angreift, kompensiert werden kann.

Wird bei Über- oder Unterschreiten des Ist-Wertes über einen vorgegebenen Wert des Bänderabstandes und/oder Dicke der zu fertigenden beliebig langen Bahn od. dgl. gegenüber dem Soll-Wert vorerst der Abstand der Kalibrierrollen zueinander geändert, so kann eine besonders einfache Dickenregelung der zu fertigenden Bahnen erreicht werden, da beispielsweise der Außenabstand der Kalibrierrollen zueinander die geringste Dicke der Bahn, Folie od. dgl. darstellt und die Nachjustierung der Dicke im mittleren Bereich der Walzen über die Saug- und/oder Druckelemente im Inneren der Kalibrierrollen erfolgen kann.

Im folgenden wird die Erfindung anhand der Zeichnungen und Beispiele näher erläutert.

Es zeigen:
Fig. 1 eine erfindungsgemäße Einrichtung mit einer Doppelbandanlage,
Fig. 2 und 4 einen Querschnitt durch die Kalibrierrolle mit Welle,
Fig. 3 einen Längsschnitt durch eine Kalibrierrolle mit Welle und Druckelementen,
Fig. 5 in schematischer Darstellung die druckmäßige Ansteuerung der Druckelemente,
Fig. 6 eine Temperiereinrichtung von oben gesehen,
Fig. 7 die Öffnungen zur Zuführung und Absaugung eines Fluides,
Fig. 8 in schematischer Darstellung die Einrichtung zur Temperierung der zu einer Vielzahl von Öffnungen zugeführten Fluide,
Fig. 9 und 10 Lagerung einer in x- und y-Richtung verstellbaren Welle sowie
Fig. 11 und 12 die Lage der Meßpunkte für die Produktdicke bzw. Temperatur.

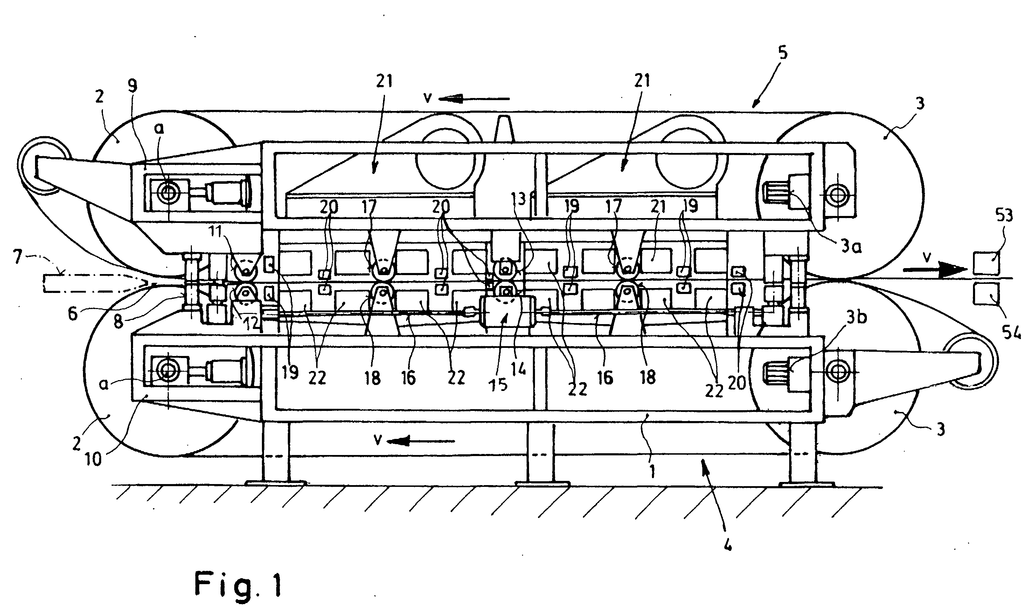

Die in Fig. 1 dargestellte Einrichtung weist einen Rahmen 1 auf, welcher die gesamte Einrichtung, insbesondere die Umlenkrollen 2 und Antriebsrollen 3, trägt. Der Längsabstand der Achsen der Rollen beträgt 7.200 mm. Durch diese Rollen werden ein unteres Band 4 und oberes Band 5 mit einer Breite von 1.950 mm aus hochglanzpoliertem Stahl, welcher gegebenenfalls eine Hochglanzverchromung trägt, in Richtung des Pfeiles v in gleichförmiger Geschwindigkeit bewegt. Durch die beiden Umlenkrollen 2 mit einem Durchmesser von 1.800 mm und die mit ihnen kooperierenden oberen und unteren Bänder 4, 5 wird ein Spalt 6 gebildet, der sich nur im Bereich der Umlenkrollen befindet, in welchem über eine Schlitzdüse 7 eines nicht dargestellten Extruders, beispielsweise thermoplastischer Kunststoff, wie Polyacetale, Polyvinylchlorid, Polykarbonate, Polymethylmethacrylate, Polymerisate oder ihre Vorpolymerisate eingebracht werden. Die Schlitzdüse speist in den Spalt im wesentlichen in Gesamtheit quer entlang der Bänder ein. Der Abstand der Umlenkrollen 2 wird durch einen hydraulischen Stempel 8 geregelt, der den Abstand zwischen dem oberen Träger 9 für die obere Umlenkrolle 2 und dem unteren Träger 10 für die untere Umlenkrolle einstellt.

In Bewegungsrichtung v der Bänder gesehen befinden sich nach dem Einlaufspalt 6 eine obere und untere Kalibrierrolle 11, 12, welche die Bänder 4 und 5 ablenken und mit einem geringeren Abstand gegeneinander halten als im gesamten Einlaufspalt 6. Die Antriebsrollen 3 weisen jeweils einen eigenen Antriebsmotor 3a und 3b auf. Die weiteren Kalibrierrollen 13, 14 weisen einen gemeinsamen Antrieb 15 auf, der für eine synchrone Bewegung sowie der Kalibrierrollen 11, 12, 13 und 14 Sorge trägt. Im Gestänge 16 des gemeinsamen Antriebes 15 sind nicht dargestellte Hardyscheiben vorgesehen, um geringfügige Unfluchtigkeit des Gestänges, u. zw. der Wellen zueinander, auszugleichen. Falls erforderlich, können andere Gelenke, wie beispielsweise Kardangelenke, zum Einsatz gelangen. Die oberen Rollen 17 und unteren Rollen 18, die in der Horizontalen und Vertikalen verschieblich ausgebildet sein können, haben lediglich die Aufgabe, das obere bzw. untere Band zu tragen und gegebenenfalls leicht ausrichtend in Richtung zum anderen Band zu halten.

Vor oder nach den Kalibrierrollen sind Sensoren 19 mit Strahlenquelle, insbesondere Laser, angeordnet, die entweder quer zur Bandlängserstreckung bewegbar sind oder wie gegenständlich mittig und jeweils 70 cm von der Mitte quer zur Bandlängserstreckung vorgesehen sind, welche über eine Entfernungsmessung, beispielsweise Interferenzmessung, die Ausrichtung der Rollen oder auch des Bandes messen und in Abhängigkeit von den Soll-Werten, meist eine ebene Ausbildung der Bänder, die in den Kalibrierrollen angeordneten Druckelementen mit entsprechendem Druck beaufschlagen, um die erwünschte Ausrichtung dieser zu erreichen. Hiebei wird derart vorgegangen, daß über eine Soll/Ist-Wert-Vergleichsschaltung der Druck- oder Saugspannung, welche von den Druckelementen auf die Kalibrierrolle ausgeübt wird, so lang geregelt wird, bis der Ist-Wert mit dem Soll-Wert in Grenzen übereinstimmt. Weicht der Soll-Wert besonders stark vom Ist-Wert ab, so wird der Abstand der Kalibrierwalzen zueinander geändert. Der Normalabstand in Bandlängsrichtung von der Achse a der Umlenkrollen beträgt 0,9 m, 4,1 m und 5,4 m. Derartige Soll/Ist-Wert-Vergleichschaltungen, die beispielsweise den Durchtrittsquerschnitt für ein Reduzierventil regeln, sind am Markt erhältliche Einrichtungen.

Zur Dickenmessung der Produktbahn ist außerhalb des Bereiches der Bänder eine radioaktive β-Strahlenquelle 53 in analoger Anordnung und Zahl wie die Interferenzsensoren 19 und Sensoren 54 vorgesehen.

Zusätzlich können Temperatursensoren 20, u. zw. IR-Strahlungsmeßelemente, oberhalb und unterhalb der Bänder angeordnet werden, welche zur Steuerung des zur Temperierung dienenden Fluides vorgesehen sein. Die Temperatursensoren 20 sind auf die Bandquererstreckung in der Mitte und sodann beidseitig hievon in 40 cm und 90 cm Entfernung angeordnet. Der Normalabstand in Längsrichtung der Bänder zur Achse a der Umlenkrollen 2 beträgt 1,6 m, 2,8 m und 5,9 m. Zur Temperierung des oberen Bandes sind Temperiereinrichtungen 21 und zur Temperierung des unteren Bandes sind Temperiereinrichtungen 22 vorgesehen.

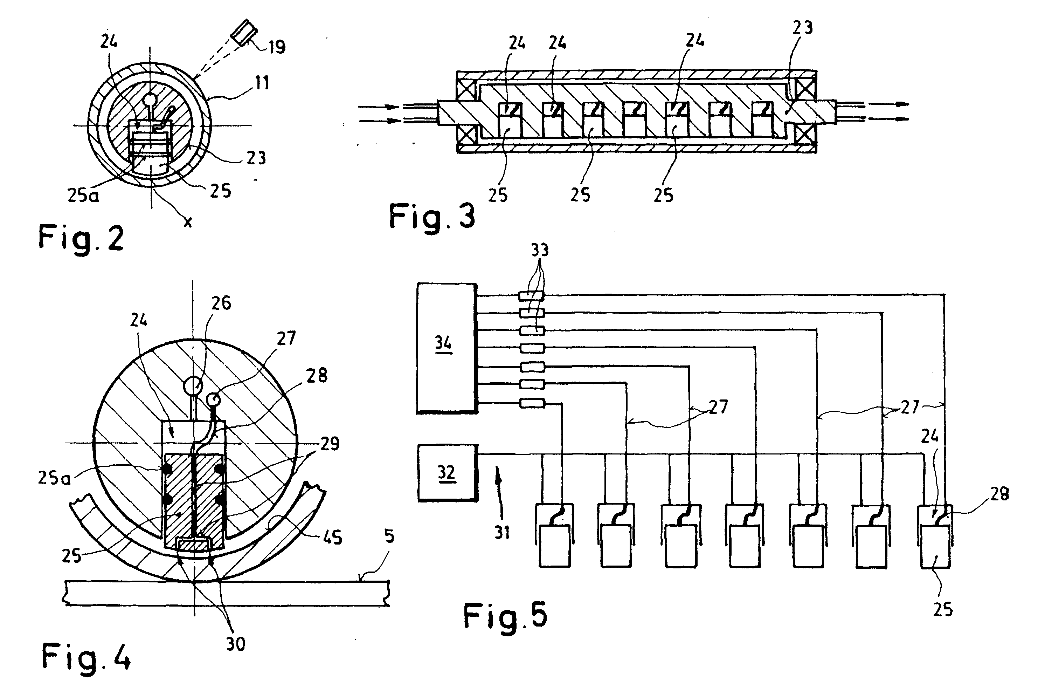

Die in Fig. 2 im Schnitt dargestellte obere oder untere Kalibrierrolle 11 weist einen zylindrischen Mantel auf, dessen Linearität über einen Interferenzsensor 19 mit Strahlenquelle, insbesondere Laser, aufgenommen wird. Obwohl die Linearität entlang der Linie x einer Erzeugenden erwünscht ist, kann anhand der Deformation der Kalibrierrolle an einem beliebigen Ort oder auch, so erwünscht, des Bandes die Abweichung im Bereich der Linie x entweder rechnerisch oder empirisch festgestellt werden, so daß eine entsprechende Steuerung der Druckelemente erfolgen kann. Die Linearitätsmessung erfolgt bevorzugt direkt am Außenmantel der Kalibrierrollen.

Die Welle 23 der Kalibrierrolle weist, wie besonders deutlich der Fig. 3 entnehmbar, zylindrische Ausnehmungen 24 auf, in welchen Kolben 25, die als Druckelemente dienen, längsverschieblich angeordnet sind. Der Kolben 25 ist über Dichtungen 25a gegenüber der zylindrischen Ausnehmung 24 abgedichtet.

Wie besonders aus den Fig. 3 und 4 ersichtlich, wird die zylindrische Ausnehmung 24 über eine Leitung 26 mit einem Fluid druckbeaufschlagt, wobei der Kolben 25 in Richtung gegen den inneren Mantel 45 der Kalibrierrollen, u. zw. in Richtung gegen das obere Band 5, gedrückt wird. Der Kolben 25 ist mit der Leitung 27 über eine flexible Schlauchverbindung 28 verbunden. Innerhalb des Kolbens ist die Verteilung des Druckfluides über Leitungen 29 verwirklicht, wobei Bohrungen 30 das Druckfluid in Richtung zum Band 5 leiten, und so in diesem Bereich einen Unteroder Überdruck aufbauen.

Wie aus Fig. 5 ersichtlich, können die zylindrischen Ausnehmungen 24 über eine gemeinsame Druckleitung 31 von einem Druckspeicher 32 mit einem Druckmedium, z. B. Hydraulikflüssigkeit, beaufschlagt werden und werden so unabhängig vom Druck, welcher die erwünschte Rollengeometrie erstellen soll, gegen den inneren Mantel 45 gehalten.

Die Kolben 25, u. zw. ihre Leitungen 29 und die gegen den inneren Mantel 45 gerichteten Öffnungen 30, werden über die Leitungen 27 angespeist. Jede dieser Leitungen 27 weist ein Reduzierventil 33 auf, das über das mit dem Sensor 19 der jeweilige Druck des Hydraulikfluides, das gegen den inneren Mantel 45 der Kalibrierrolle geleitet wird, regelt. Das Druckfluid wird aus einem Druckspeicher 34 abgeleitet, der von einem nicht dargestellten Vorratsbehälter mit nicht dargestellter Pumpe gespeichert wird. Je nach der erwünschten geometrischen Ausgestaltung werden die Leitungen in den Kolben 25 mit einem entsprechenden Hydraulikmedium versehen, so daß die unterschiedlichen Druckbeaufschlagung der Kalibrierrollen nach erwünschter Geometrie, beispielsweise geradliniger Ausführung der Kalibrierrollen, erfolgen kann.

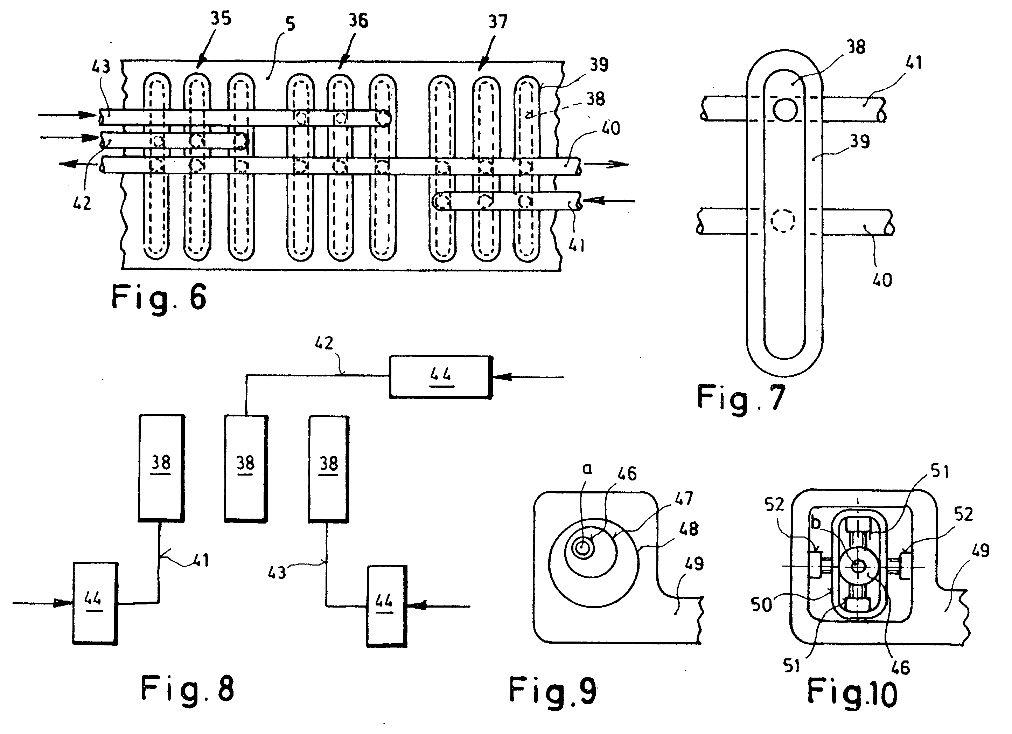

In den Fig. 6, 7 und 8 sind Einzelheiten der Temperiereinrichtung dargestellt.

In Fig. 6 ist die Sicht von oben auf das obere Band 5, wobei drei Einheiten 35, 36, 37 der Temperiereinrichtung dargestellt sind, die jeweils, wie der Fig. 7 deutlich zu entnehmen, eine Austrittsöffnung 38 und eine diese ringförmig umschließende Abströmöffnung 39 aufweisen. Die Abströmöffnungen 39 sind über eine gemeinsame Rohrleitung 40 verbunden, wohingegen die Austrittsöffnungen 38 gruppenweise zusammengefaßt sind und über Rohrleitungen 41, 42, 43 mit jeweils auf eine bestimmte Temperatur eingestellten Fluid, u. zw. Druckluft, gespeist werden.

Wie der Fig. 8 zu entnehmen, wird die Luft über eine nicht dargestellte Konditionieranlage, welche eine Entstaubung der Luft, Einstellung der Feuchte und Temperatur realisiert, einen Wärmetauscher 44, in welchem die jeweils erwünschte Temperatur des Wärmetauscherfluides eingestellt wird und sodann über die Rohrleitung 41, 42, 43 den Austrittsöffnungen 38 zugeführt. Die Wärmetauscher 44 werden entsprechend den Werten der Sensoren 20, wie an sich bekannt, über eine Soll/Ist-Wert-Steuerung durchgeführt.

In den Fig. 9 und 10 sind zwei unterschiedliche Halterungen für die Lagerung von Wellen a bzw. b der Umlenk- bzw. Antriebsrollen als auch der Kalibrierrollen dargestellt. Die Wellen a, b sind in einem Rollenlager 46 gelagert. Dieses Rollenlager ist bei der Ausführungsform gemäß Fig. 9 in einer Scheibe 47 exzentrisch gelagert, welche ihrerseits in einer weiteren Scheibe 48 gelagert ist, welche ihrerseits in der Halterung 49 ebenfalls drehbar gelagert ist. Durch Verdrehen der Scheiben 47 und 48 kann eine Dislozierung der Welle a sowohl in der x- als auch in der z-Richtung erfolgen.

Bei der in Fig. 10 dargestellten Lagerung ist die Welle b ebenfalls in einem Rollenlager 46 gelagert, wobei eine Aufnahme 50 für das Rollenlager 46 vorgesehen ist, in welchem es über Schraubelemente 51 in z-Richtung verstell- und fixierbar ist. Die Aufnahme 50 ist ihrerseits in der Halterung 49 über weitere Schraubelemente 52 in x-Richtung verschiebbar. Die Schraubelemente können beispielsweise händisch aber auch elektrisch verstellt werden. Anstelle der Schraubelemente sind auch hydraulische Stempel einsetzbar.

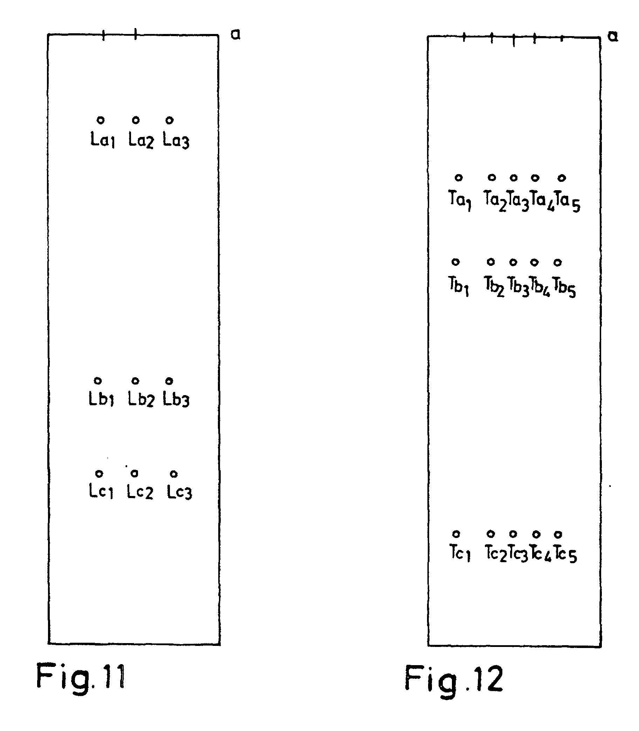

Die in Fig. 11 in Draufsicht dargestellten Meßpunkte L weisen zur Achse a einen mit dem Indizes a 0,9 m, mit dem Indizes b 4,1 m und dem Indizes c 5,4 m Normalabstand auf. Die Meßpunkte La₂, Lb₂, Lc₂ sind jeweils in der Mitte angeordnet, wohingegen die Meßpunkte La₁, La₃, Lb₁, Lb₃, Lc₁ und Lc₃ jeweils 70 cm im Normalabstand von der Mitte und damit von den Meßpunkten mit dem Indizes 2 entfernt sind.

Die in Fig. 12 dargestellten Meßpunkte für die Temperatur sind mit dem Indizes a 1,6 m, mit dem Indizes b 2,8 m und dem Indizes c 5,9 m im Normalabstand zur Achse a angeordnet. Die Meßpunkte Ta₃, Tb₃ und Tc₃ sind mittig angeordnet, wohingegen die Meßpunkte Ta₂, Ta₄, Tb₂, Tb₄, Tc₂, Tc₄ jeweils 40 cm links und rechts von der Mitte angeordnet sind, und die Meßpunkte Ta₁, Ta₅, Tb₁, Tb₅, Tc₁ und Tc₅ jeweils 90 cm links und rechts von der Mitte angeordnet sind.

### Beispiel 1:

Ein Polykarbonatkunststoff, Handelsmarke Lexan 101 der Firma General Electric Companie, wurde über einen Extruder in den Einlaufspalt 6 zwischen den Bändern 3, 4 der Vorrichtung gemäß Fig. 1 über eine Breite von 1.870 mm extrudiert. Die Leistung des Doppelschneckenextruders betrug 1.000 kg/h und das Extrudat trat mit einer Temperatur von 325° C in den Spalt ein. Weder die Umlenk- noch die Antriebsrollen waren thermisch isoliert, auch die Bänder wiesen keine zusätzliche thermische Isolierung auf. Die Umlenkrollen wurden auf eine Temperatur von 90° C konstant gehalten, wohingegen die Temperatur der Antriebsrollen auf 110° C temperiert wurden. Die Temperierung der Rollen wurde durch in Umlauf geführte Wärmetauscherflüssigkeit durchgeführt. Die Antriebsrollen wurden so eingestellt, daß das den Spalt zwischen den Antriebsrollen verlassende Produkt eine Dicke von 6,05 mm bei 120°C aufwies. Der Normalabstand der Umlenkrollen 2 mit Bändern im Einlaufspalt 6 im Bereich der Achsen a betrug 100 mm, wohingegen der Abstand der Bänder zwischen den Kalibrierrollen 11, 12 6,10 mm und jener zwischen den Kalibrierrollen 13 und 14 6,07 mm betrug. Der jeweils angeführte Abstand bezieht sich auf den linken bzw. rechten Rand der Rollen, so daß allfällige Durchbiegungen der Rollen bei diesen Angaben unberücksichtigt sind. An den Dickenmeßpunkten gemäß der Ausführungsform von Fig. 1 entsprechend der Fig. 11 sind folgende Werte ohne zusätzliche Korrektur der Durchbiegung der Kalibrierrollen, bezogen auf die Achsen derselben, erhalten worden.

| | | | | | |
|---|---|---|---|---|---|
| La₁ | 29,81 mm | Lb₁ | 29,86 mm | Lc₁ | 29,89 mm |
| La₂ | 29,51 mm | Lb₂ | 29,57 mm | Lc₂ | 29,61 mm |
| La₃ | 29,80 mm | Lb₃ | 29,84 mm | Lc₃ | 29,87 mm. |

Durch unterschiedliche Druckbeanspruchung des inneren Zylindermantels 45 der Kalibrierrollen, u. zw. sowohl der oberen als auch der unteren, über die Druckelemente 25, u. zw. bei den Druckelementen 25 der Kalibrierrollen 11 und 12 von links nach rechts verlaufend 8,70 MN/m², 8,62 MN/m², 8,58 MN/m², 8,56 MN/m², 8,57 MN/m², 8,58 MN/m², 8,60 MN/m², kann unmittelbar nach dem ersten Kalibrierrollenpaar 11, 12 an den Meßstellen auf folgende Werte

| | |
|---|---|
| La₁ | 29,88 mm |
| La₂ | 29,84 mm |
| La₃ | 29,90 mm |

eingestellt werden, wobei nach Verlassen der Materialbahn nach den Kalibrierrollen 13, 14 folgende Meßwerte erhalten werden konnten:

| | |
|---|---|
| Lb₁ | 29,90 mm |
| Lb₂ | 29,87 mm |
| Lb₃ | 29,92 mm. |

Nach Druckbeaufschlagung der je sieben Druckelemente des zweiten Kalibrierrollenpaares 13, 14 in den oberen und unteren Kalibrierrollen mit einem Druck von 8,90 MN/m², 8,94 MN/m², 8,98 MN/m², 9,00 MN/m², 9,06 MN/m², 9,12 MN/m², 9,15 MN/m² konnten folgende Meßwerte erhalten werden:

| | | | |
|---|---|---|---|
| Lb₁ | 29,93 mm | Lc₁ | 29,95 mm |
| Lb₂ | 29,88 mm | Lc₂ | 29,91 mm |
| Lb₃ | 29,94 mm | Lc₃ | 29,95 mm |

Die oben angeführten Meßwerte wurden erst nach Egalisierung der Temperaturen quer zur Bandlängsrichtung und Einstellung der Temperaturen in Bandlängsrichtung gemäß folgender Werte erreicht, wobei jeweils die Leistung der Temperierelemente über die Menge der zugeführten Luft eingestellt wurden.

Den Meßpunkten, welche gemäß der Ausführungsfigur der Fig. 1 entsprechend Fig. 12 positioniert sind, konnten folgende Temperaturen zugeordnet werden:

| | | | | | |
|---|---|---|---|---|---|
| Ta₁ | 192° C | Tb₁ | 148° C | Tc₁ | 115° C |
| Ta₂ | 195° C | Tb₂ | 146° C | Tc₂ | 119° C |
| Ta₃ | 203° C | Tb₃ | 150° C | Tc₃ | 117° C |
| Ta₄ | 196° C | Tb₄ | 151° C | Tc₄ | 116° C |
| Ta₅ | 190° C | Tb₅ | 145° C | Tc₅ | 115° C. |

Der Abstand der Umlenkrollen (100 mm) und Antriebsrollen (6,2 mm) einschließlich Bänder wurde über die Meßwerte der β-Strahlenmeßquelle 53 Sensor 54 bei Über- bzw. Unterschreiten von 0,5 mm des Soll-Wertes eingestellt.

Das nach diesem Verfahren erhaltene Produkte wies nach Abkühlung auf Zimmertemperatur eine Dicke quer zur Längsrichtung von 5,88 mm bis 6,1 mm auf und war optisch vollkommen leer und wies keine unterschiedlichen optischen Dichten mit Schlieren, Wellenbildungen oder dgl. auf.

Die angeführten Meßwerte stellen Mittelwerte von jeweils fünf Messungen dar, die jeweils in Abstand von einer Sekunde erhalten wurden.

### Beispiel 2:

Ein Polymethylmethacrylat (Plexiglas V415 der Handelsmarke der Firma Rohm und Haas USA) wurde über einen Extruder in den Einlaufspalt 6 zwischen den Bändern 3, 4 der Vorrichtung gemäß Fig. 1 über eine Breite von 1.870 mm extrudiert. Die Leistung des Doppelschneckenextruders betrug 800 kg/h und das Extrudat trat mit einer Temperatur von 245° C in den Spalt ein. Weder die Umlenk- noch die Antriebsrollen waren thermisch isoliert, auch die Bänder wiesen keine zusätzliche thermische Isolierung auf. Die Umlenkrollen wurden auf eine Temperatur von 80° C konstant gehalten, wohingegen die Temperatur der Antriebsrollen auf 65° C eingestellt wurde. Die Temperierung der Rollen wurde durch in Umlauf geführte Wärmetauscherflüssigkeit durchgeführt. Die Antriebsrollen wurden so eingestellt, daß das den Spalt zwischen den Antriebsrollen verlassende Produkt eine mittlere Dicke von 6,03 mm bei *65°* C aufwies. Der Normalabstand der Umlenkrollen 2 im Einlaufspalt 6 betrug 100 mm, wohingegen der Abstand der Bänder zwischen den Kalibrierrollen 11, 12 6,05 mm und jener zwischen den Kalibrierrollen 13 und 14 6,04 mm betrug. Der jeweils angeführte Abstand bezieht sich auf den linken bzw. rechten Rand der Rollen, so daß allfällige Durchbiegungen der Rollen bei diesen Angaben unberücksichtigt sind. An den Dickenmeßpunkten gemäß der Ausführungsform von Fig. 1 entsprechend der Fig. 11 sind folgende Werte ohne zusätzliche Korrektur der Durchbiegung der Kalibrierrollen, bezogen auf die Achsen derselben, erhalten worden:

| | | | | | |
|---|---|---|---|---|---|
| La₁ | 29,82 mm | Lb₁ | 29,87 mm | Lc₁ | 29,89 mm |
| La₂ | 29,58 mm | Lb₂ | 29,63 mm | Lc₂ | 29,66 mm |
| La₃ | 29,82 mm | Lb₃ | 29,85 mm | Lc₃ | 29,87 mm. |

Durch unterschiedliche Druckbeanspruchung des inneren Zylindermantels 45 der Kalibrierrollen, u. zw. sowohl der oberen als auch der unteren, über die Druckelemente 25, u. zw. bei den Druckelementen 25 der Kalibrierrollen 11 und 12 von links nach rechts verlaufend 7,14 MN/m², 7,20 MN/m², 7,25 MN/m², 7,28 MN/m², 7,30 MN/m², 7,32 MN/m², 7,32 MN/m², können unmittelbar nach dem ersten Kalibrierrollenpaar 11, 12 an den Meßstellen auf folgende Werte

| | |
|---|---|
| La₁ | 29,89 mm |
| La₂ | 29,86 mm |
| La₃ | 29,87 mm |

eingestellt werden, wobei nach Verlassen der Materialbahn nach den Kalibrierrollen 13, 14 folgende Meßwerte erhalten werden konnten:

| | |
|---|---|
| Lb₁ | 29,89 mm |
| Lb₂: | 29,88 mm |
| Lb₃: | 29,88 mm. |

Nach Druckaufschlagung der sieben Druckelemente in den oberen und unteren Kalibrierrollen 13, 14 mit einem Druck von 7,62 MN/m², 7,56 MN/m², 7,50 MN/m², 7,40 MN/m², 7,43 MN/m², 7,45 MN/m², 7,48 MN/m² konnten folgende Werte erhalten werden:

| | | | | | |
|---|---|---|---|---|---|
| La₁ | 29,89 mm | Lb₁ | 29,92 mm | Lc₁ | 29,94 mm |
| La₂: | 29,87 mm | Lb₂ | 29,94 mm | Lc₂ | 29,98 mm |
| La₃: | 29,88 mm | Lb₃ | 29,95 mm | Lc₃ | 29,97 mm. |

Die oben angeführten Meßwerte wurden erst nach Egalisierung der Temperaturen quer zur Bandlängsrichtung und Einstellung der Temperaturen in Bandlängsrichtung gemäß folgender Werte erreicht, wobei jeweils die Leistung der Temperierelemente über die Menge der zugeführten Luft eingestellt wurden.

Den Meßpunkten, welche gemäß der Ausführungsfigur der Fig. 1 entsprechend Fig. 12 positioniert sind, konnten folgende Temperaturen zugeordnet werden:

| | | | | | |
|---|---|---|---|---|---|
| Ta₁ | 121° C | Tb₁ | 90° C | Tc₁ | 63° C |
| Ta₂: | 122° C | Tb₂ | 90° C | Tc₂ | 63° C |
| Ta₃: | 120° C | Tb₃ | 92° C | Tc₃ | 59° C |
| Ta₄: | 120° C | Tb₄ | 89° C | Tc₄ | 62° C |
| Ta₅: | 118° C | Tb₅ | 88° C | Tc₅ | 60° C. |

Der Abstand der Umlenkrollen und Antriebsrollen wurde über Meßwerte, die mit der β-Strahlenmeßquelle 53 und dem Sensor 54 erhalten wurden und bei Über- bzw. Unterschreiten von 0,5 mm vom Soll-Wert eingestellt.

Das nach diesem Verfahren erhaltene Produkte wies nach Abkühlung auf Zimmertemperatur eine Dicke quer zur Längsrichtung von 5,91 mm bis 6,12 mm auf und war optisch vollkommen leer und wies keine unterschiedlichen optischen Dichten mit Schlieren, Wellenbildungen oder dgl. auf.

Die angeführten Meßwerte stellen Mittelwerte von jeweils fünf Messungen dar, die jeweils in Abstand von einer Sekunde erhalten wurden.

## Patentansprüche

1. Vorrichtung zum kontinuierlichen Herstellen von, insbesondere planparallelen, flächigen beliebig langen Folien, Bahnen oder Platten mit einer plastischen Masse, z. B. Kunststoff, welche mit Temperaturänderung verfestigt, mit zumindest einem unteren und zumindest einem oberen endlosen durchbrechungsfreien Band (4, 5), insbesondere aus Stahl, einem von diesen gebildeten formenden und/oder temperierenden Bereich, jeweils mit Antriebs- (3) und Umlenkrollen (2), Temperiereinrichtung(en) (21, 22), welche am unteren und oberen Band sowie vorzugsweise an den Umlenk- und/oder Antriebsrollen angreifen, einer Speiseeinrichtung (7), die einen Schlitz, insbesondere eine Schlitzdüse, aufweist, insbesondere Extruder, über welche die plastische Masse in einen Einlaufspalt (6) zwischen die Bänder (4, 5) über deren Breite speisbar ist und einer Einrichtung (8) zur Einstellung des Normalabstandes der Bänder (4, 5) zueinander, insbesondere über die zwischen Umlenk- und Antriebsrolle (2, 3), **dadurch gekennzeichnet, daß** zwischen Umlenk- und Antriebsrolle (2, 3) zumindest je eine am oberen oder unteren Band (4, 5) in dem, vorzugsweise formenden und/oder temperierenden, Bereich an der der Masse formenden Seite abgewandten Seite drehbare Kalibrierrollen (11, 12, 13, 14) vorgesehen ist/sind, und der Abstand der Bänder zueinander im Bereich der drehbaren Kalibrierrollen geringer ist als der Abstand der Bänder (4, 5) des Einlaufspaltes (6) im Bereich zwischen den Antriebsoder Umlenkrollen und jede Antriebsrolle zumindest einen eigenen Antriebsmotor aufweist.

2. Vorrichtung nach Anspruch 1, **dadurch gekennzeichnet, daß** zumindest eine obere drehbare Kalibrierrolle (11, 13,), die am oberen Band (5) angreift und eine untere drehbare Kalibrierrolle (12, 14), die am unteren Band angreift, vorgesehen ist, welche Kalibrierrollen (11, 12, 13, 14), insbesondere ihre entsprechenden Achsen senkrecht zur Bandbewegungsrichtung (v), übereinander angeordnet sind.

3. Vorrichtung nach Anspruch 1 oder 2, **dadurch gekennzeichnet, daß** die Achsen der Antriebsrollen (3) und/oder der Umlenkrollen (2) zueinander schief einstellbar sind.

4. Vorrichtung nach Anspruch 1, 2 oder 3, **dadurch gekennzeichnet, daß** zumindest eine, insbesondere alle, Kalibrierrollen synchron zur Bandgeschwindigkeit antreibbar ist/sind.

5. Vorrichtung nach einem der Ansprüche 1 bis 4, **dadurch gekennzeichnet, daß** zumindest eine Kalibrierrolle (11, 12, 13, 14) einen um die Achse dieser rotationssymmetrisch ausgebildeten Hohlraum mit einem inneren Mantel (45) aufweist, in welchem Druckelemente (25) drehfest angeordnet sind, die an dem inneren Mantel (45) in Richtung zum Band oder umgekehrt angreifen.

6. Vorrichtung nach Anspruch 5, **dadurch gekennzeichnet, daß** die Druckelemente (25) schwenkbar angeordnet sind.

7. Vorrichtung nach Anspruch 5 oder 6, **dadurch gekennzeichnet, daß** die Druckelemente (25) über ein Fluid, insbesondere über eine Flüssigkeit, zur Krafteinwirkung gegen oder von der Kalibrierrolle (11, 12, 13, 14) einstellbar sind.

8. Vorrichtung nach einem der Ansprüche 5, 6 oder 7, **dadurch gekennzeichnet, daß** die Druckelemente (25) zumindest eine, insbesondere mehrere, Austrittsöffnung(en) (30) für ein Fluid aufweisen, die in Richtung, insbesondere zur benachbarten Fläche des inneren Mantels (45), der Kalibrierrolle (11, 12, 13, 14) gerichtet ist/sind.

9. Vorrichtung nach einem der Ansprüche 1 bis 8, **dadurch gekennzeichnet, daß** die Achsen der Kalibrierrollen (11, 12, 13, 14) eine Stelleinrichtung aufweisen, über welche die Kalibrierrollen, unabhängig von der Einrichtung zur Einstellung des Normalabstandes der Bänder zueinander, betätigbar sind und eine windschiefe Einstellung der Achsen zueinander ermöglicht.

10. Vorrichtung nach einem der Ansprüche 1 bis 9, **dadurch gekennzeichnet, daß** die Temperiereinrichtung (21, 22) Austrittsöffnungen (38), die zum Band an der die Masse beaufschlagenden Seite abgewandten Seite gerichtet sind und insbesondere diese umschließende Abströmöffnung (39), für ein Wärmeträgerfluid, insbesondere Luft, aufweist.

11. Vorrichtung nach Anspruch 10, **dadurch gekennzeichnet, daß** eine Vielzahl von Austrittsöffnungen (38) über Leitungen (41, 42, 43) mit einem das Fluid temperierenden Wärmetauscher (44) und eine weitere Vielzahl von Abströmöffnungen (39) über Leitung(en) (40) verbunden ist/sind.

12. Verfahren zum kontinuierlichen Herstellen von, insbesondere planparallelen, flächigen beliebig langen Folien, Bahnen oder Platten, wobei eine plastische Masse in einen mit einem oberen (5) und einem unteren endlosen Band (4) sowie Umlenk- und Antriebsrollen (2, 3), welche Bänder in gleicher Richtung bewegt werden, gebildeten Einlaufspalt (6) über dessen Breite eingebracht, zwischen den Bändern (4, 5) in ihrer Dicke reduziert und temperiert, gegebenenfalls gekühlt, werden, die Dicke der Folien, Bahnen oder Platten gemessen und der Abstand der Bänder zueinander eingestellt wird, **dadurch gekennzeichnet, daß** zumindest ein, insbesondere beide, Bänder (4, 5) an annähernd übereinander angeordneten drehbare Kalibrierrollen (11, 12, 13, 14) abgelenkt werden, die zwischen Umlenk- und Antriebsrollen (2, 3) angeordnet sind, und zumindest eine, insbesondere beide, Kalibrierrolle(n) (11, 12, 13, 14) über im Inneren derselben angeordneten Saug- und/oder Druckelemente (25) entlang einer Erzeugenden deformiert werden.

13. Verfahren nach Anspruch 12, **dadurch gekennzeichnet, daß** der Ist-Wert des Abstandes der Bänder (4, 5) zueinander quer zur Laufrichtung nach den Kalibrierrollen (11, 12, 13, 14) an mehreren Stellen gemessen wird und bei Abweichung von Soll-Werten der Abstand der Kalibrierrollen (11, 12, 13, 14) und/oder die Druckbeaufschlagung durch die Saug- und/oder Druckelemente (25) geändert wird.

14. Verfahren nach Anspruch 12 oder 13, **dadurch gekennzeichnet, daß** der Ist-Wert der Dicke der flächigen beliebig langen Folien, Bahnen oder Platten nach dem Austritt derselben aus den Bändern (4, 5) quer zur Bewegungsrichtung der Bänder gemessen wird, und bei Abweichung von Soll-Werten der Abstand der Kalibrierrollen (11, 12, 13, 14) und/oder die Druckbeaufschlagung durch die Saug- und/oder Druckelemente (25) geändert wird.

15. Verfahren nach Anspruch 12, 13 oder 14, **dadurch gekennzeichnet, daß** die Ist-Werte der Dicke an prädestinierten Stellen über die Zeit, insbesondere über 5 bis 10 Sekunden integriert werden und sodann mit einem Soll-Wert verglichen und bei Abweichen der Abstand der Kalibrierrollen (11, 12, 13, 14) und/oder die Druckbeaufschlagung durch die Saug- und/oder Druckelemente (25) geändert wird.

16. Verfahren nach einem der Ansprüche 12 bis 15, **dadurch gekennzeichnet, daß** die Ist-Werte der Temperatur der Bänder (4, 5) längs der Bewegungsrichtung der Bänder bestimmt werden und mit Soll-Werten verglichen und bei Abweichung die Wärme- und/oder Kühlbeaufschlagung der Bänder (4, 5) und/oder Umlenk- und/oder Antriebswalzen (2, 3) geändert wird.

17. Verfahren nach einem der Ansprüche 12 bis 16, **dadurch gekennzeichnet, daß** die Ist-Werte der Temperatur der Bänder (4. 5) quer zur Bewegungsrichtung der Bänder (4, 5) bestimmt und mit Soll-Werten verglichen und bei Abweichung die Wärme- und/oder Kühlbeaufschlagung der Bänder (4, 5) und/oder Umlenk- und/oder Antriebswalzen (2, 3) geändert werden.

18. Verfahren nach einem der Ansprüche 12 bis 17, **dadurch gekennzeichnet, daß** bei Über- oder Unterschreiten des Ist-Wertes um einen vorgegebenen Wert des Bänderabstandes und/oder Dicke der endlosen Bahnen od. dgl. gegenüber dem Soll-Wert vorerst der Abstand der Kalibrierrollen (11, 12, 13, 14) zueinander geändert wird.

## Claims

1. Device for the continuous production of in particular plane-parallel, two-dimensional, random length sheets, webs or sheeting having a plastic mass, e.g. synthetic material which solidifies in the event of a change in temperature, comprising at least one lower and at least one upper continuous belt (4, 5) which is free of openings and is made in particular from steel, a forming and/or tempering region which is formed by said belts, in each case having drive rollers (3) and deflecting rollers (2), tempering device(s) (21, 22) which act upon the lower and upper belt and preferably upon the deflecting rollers and/or the drive rollers, a feeding device (7) which comprises a slot, in particular a slot nozzle, in particular extruders, by way of which the plastic mass can be fed into an run-in gap (6) between the belts (4, 5) across the width thereof, and comprising a device (8) for the purpose of adjusting the normal mutual spacing between the belts (4, 5), in particular between the deflecting and drive roller (2, 3), **characterised in that** between the deflecting and drive roller (2, 3) there is/are provided in each case at least one calibrating roller (11, 12, 13, 14) which can be rotated on the upper or lower belt (4, 5) in the preferably forming and/or tempering region on the side remote from the mass-forming side, and the mutual spacing between the belts is smaller in the region of the rotatable calibrating rollers than the spacing between the belts (4, 5) of the run-in gap (6) in the region between the drive or deflecting rollers and each drive rollers comprises at least one dedicated drive motor.

2. Device according to claim 1, **characterised in that** there are provided at least one upper rotatable calibrating roller (11, 13), which acts upon the upper belt (5), and a lower rotatable calibrating roller (12, 14), which acts upon the lower belt, which calibrating rollers (11, 12, 13, 14), in particular the corresponding axes thereof, are disposed one on top of the other perpendicular to the belt-movement direction (v).

3. Device according to claim 1 or 2, **characterised in that** the axes of the drive rollers (3) and/or the deflecting rollers (2) with respect to each other can be adjusted in an inclined manner.

4. Device according to claim 1, 2 or 3, **characterised in that** at least one, in particular all calibrating rollers can be driven synchronously with respect to the belt speed.

5. Device according to any one of the claims 1 to 4, **characterised in that** at least one calibrating roller (11, 12, 13, 14) comprises a hollow space which is formed in a rotationally symmetrical manner about the axis thereof and has an inner casing (45), in which pressure elements (25) are disposed in a non-rotational manner which act upon the inner casing (45) in the direction of the belt or in the opposite direction.

6. Device according to claim 5, **characterised in that** the pressure elements (25) are disposed in a pivotal manner.

7. Device according to claim 5 or 6, **characterised in that** the pressure elements (25) can be adjusted by means of a fluid, in particular by means of a liquid, for the purpose of exerting force against or by the calibrating roller (11, 12, 13, 14).

8. Device according to any one of the claims 5, 6 or 7, **characterised in that** the pressure elements (25) comprise at least one, in particular several outlet orifice(s) (30) for a fluid which orifice(s) is/are directed in the direction, in particular towards the adjacent surface of the inner casing (45), of the calibrating rollers (11, 12, 13, 14).

9. Device according to any one of the claims 1 to 8, **characterised in that** the axes of the calibrating rollers (11, 12, 13, 14) comprise an adjusting device, by means of which it is possible to actuate the calibrating rollers independently of the device for adjusting the normal mutual spacing between the belts, and said adjusting device renders it possible to adjust the axes in a skew-whiff manner with respect to each other.

10. Device according to any one of the claims 1 to 9, **characterised in that** the tempering device (21, 22) comprises outlet orifices (38), which are directed towards the belt on the side remote from the side acting upon the mass, and comprises a discharge orifice (39), which surrounds in particular said outlet orifices, for a heat-carrier fluid, in particular air.

11. Device according to claim 10, **characterised in that** a plurality of outlet orifices (38) is connected via lines (41, 42, 43) to a heat exchanger (44), which tempers the fluid, and a further plurality of discharge orifices (39) is connected via line(s) (40).

12. Method for the continuous production of in particular plane-parallel, two-dimensional, random length sheets, webs or sheeting, wherein a plastic mass is introduced into a run-in gap (6) across its width which run-in gap is formed with an upper (5) and lower continuous belt (4) and deflecting and drive rollers (2, 3), which belts are moved in the same direction, the said plastic mass is reduced in thickness and tempered between the belts (4, 5) and optionally cooled, the thickness of the sheets, webs or sheeting is measured and the mutual spacing between the belts is adjusted, **characterised in that** at least one, in particular both belts (4, 5) are deflected on rotatable calibrating rollers (11, 12, 13, 14) which are disposed approximately one on top of the other and are arranged between deflecting and drive rollers (2, 3), and at least one, in particular both calibrating roller(s) (11, 12, 13, 14) are deformed along a generating line by way of suction and/or pressure elements (25) disposed on the inside of said calibrating rollers.

13. Method according to claim 12, **characterised in that** the actual value of the mutual spacing between the belts (4, 5) is measured at several points transverse to the running direction downstream of the calibrating rollers (11, 12, 13, 14) and in the event of a deviation from desired values, the spacing between the calibrating rollers (11, 12, 13, 14) and/or the pressurisation by the suction and/or pressure elements (25) is changed.

14. Method according to claim 12 or 13, **characterised in that** the actual value of the thickness of the two-dimensional, random length sheets, webs or sheeting is measured, upon their exit from the belts (4, 5), in a transverse manner with respect to the movement direction of the belts, and in the event of a deviation from desired values, the spacing between the calibrating rollers (11, 12, 13, 14) and/or the pressurisation by the suction and/or pressure elements (15) is changed.

15. Method according to claim 12, 13 or 14, **characterised in that** the actual values of the thickness at predetermined sites are integrated over time, in particular over 5 to 10 seconds and are then compared with a desired value and in the event of deviation, the spacing between the calibrating rollers (11, 12, 13, 14) and/or the pressurisation by the suction and/or pressure elements (25) is changed.

16. Method according to any one of the claims 12 to 15, **characterised in that** the actual values of the temperature of the belts (4, 5) are determined along the movement direction of the belts and are compared with desired values and in the event of a deviation, the heating and/or cooling of the belts (4, 5) and/or the deflecting and/or the drive rollers (2, 3) is changed.

17. Method according to any one of the claims 12 to 16, **characterised in that** the actual values of the temperature of the belts (4, 5) are determined transversely with respect to the movement direction of the belts (4, 5) and compared with desired values and in the event of a deviation, the heating and/or cooling of the belts (4, 5) and/or the deflecting and/or drive rollers (2, 3) is changed.

18. Method according to any one of the claims 12 to 17, **characterised in that** where the actual value exceeds or is less than the desired value by a specified value of the belt spacing and/or the thickness of the continuous webs or the like, the mutual spacing between the calibrating rollers (11, 12, 13, 14) is changed first.

## Revendications

1. Dispositif pour la fabrication en continu de feuilles, de bandes ou de plaques planes, essentiellement en plans parallèles, d'une longueur quelconque, avec une masse plastique, par exemple de matière synthétique, qui se solidifie avec une modification de la température, comportant au moins une bande inférieure sans fin et au moins une bande supérieure sans fin non perforées (4, 5), en particulier en acier, une région de formation et/ou de contrôle de température formée par ces bandes, chacune avec des rouleaux d'entraînement (3) et des rouleaux de renvoi (2), un ou plusieurs dispositifs de maintien de température (21, 22) qui s'engagent sur la bande inférieure et sur la bande supérieure ainsi que de préférence sur les rouleaux de renvoi et/ou les rouleaux d'entraînement, un dispositif d'alimentation (7) qui présente une fente, en particulier un ajutage en fente, en particulier une extrudeuse, par laquelle la masse plastique peut être alimentée dans une fente d'entrée (6) formée entre les bandes (4, 5) sur la largeur de celles-ci, et un dispositif (8) pour le réglage de l'écart normal entre les bandes (4, 5), en particulier par l'intermédiaire des rouleaux de renvoi et des rouleaux d'entraînement (2, 3), **caractérisé en ce qu'**au moins un rouleau rotatif de calibration (11, 12, 13, 14) est prévu sur la bande supérieure ou sur la bande inférieure (4, 5) entre le rouleau d'entraînement de renvoi et le rouleau d'entraînement (2, 3), de préférence dans la région qui assure la formation et/ou le contrôle de la température, sur le côté non tourné vers le côté de façonnage de la masse, l'écart mutuel entre les bandes dans la région des rouleaux rotatifs de calibration étant plus petit que l'écart entre les bandes (4, 5) dans l'interstice d'entrée (6) dans la région située entre les rouleaux d'entraînement ou entre les rouleaux de renvoi, et chaque rouleau d'entraînement présente au moins un propre moteur d'entraînement.

2. Dispositif selon la revendication 1, **caractérisé en ce qu'**au moins un rouleau rotatif supérieur de calibration (11, 13) qui s'engage sur la bande supérieure (5) et un rouleau rotatif inférieur de calibration (12, 14) qui s'engage sur la bande inférieure sont prévus, lesquels rouleaux de calibration (11, 12, 13, 14), en particulier leurs axes correspondants, sont disposés l'un au-dessus de l'autre perpendiculairement à la direction de déplacement de la bande (v).

3. Dispositif selon la revendication 1 ou 2, **caractérisé en ce que** les axes des rouleaux d'entraînement (3) et/ou des rouleaux de renvoi (2) peuvent être ajustés obliquement l'un par rapport à l'autre.

4. Dispositif selon la revendication 1, 2 ou 3, **caractérisé en ce qu'**au moins un, et en particulier tous les rouleaux de calibration sont entraînés de manière synchronisée par rapport à la vitesse de la bande.

5. Dispositif selon l'une des revendications 1 à 4, **caractérisé en ce qu'**au moins un rouleau de calibration (11, 12, 13, 14) présente un espace creux avec une enveloppe intérieure (45), configuré à symétrie de rotation autour de l'axe de ce rouleau, dans lequel des éléments de poussée (25) sont disposés de manière à ne pas pouvoir tourner et s'engagent sur l'enveloppe intérieure (45) dans la direction de la bande ou inversement.

6. Dispositif selon la revendication 5, **caractérisé en ce que** les éléments de poussée (25) sont disposés de manière à pouvoir pivoter.

7. Dispositif selon la revendication 5 ou 6, **caractérisé en ce que** les éléments de poussée (25) peuvent être ajustés en vue de l'application d'une force pour s'approcher ou s'éloigner du rouleau de calibration (11, 12, 13, 14), par l'intermédiaire d'un fluide, en particulier par l'intermédiaire d'un liquide.

8. Dispositif selon l'une des revendications 5, 6 ou 7, **caractérisé en ce que** les éléments de poussée (25) présentent au moins une et en particulier plusieurs ouvertures de sortie (30) pour un fluide, la ou les ouvertures de sortie étant orientées en direction du rouleau de calibration (11, 12, 13, 14), en particulier vers la surface voisine de l'enveloppe intérieure (45).

9. Dispositif selon l'une des revendications 1 à 8, **caractérisé en ce que** les axes des rouleaux de calibration (11, 12, 13, 14) présentent un dispositif d'ajustement par lequel les rouleaux de calibration peuvent être activés, indépendamment du dispositif de réglage de l'écart normal entre les bandes, le dispositif d'ajustement permettant un réglage oblique des axes les uns par rapport aux autres.

10. Dispositif selon l'une des revendications 1 à 9, **caractérisé en ce que** le dispositif (21, 22) de contrôle de la température présente des ouvertures de sortie (38) pour un fluide caloporteur, en particulier de l'air, qui sont dirigées vers la bande, du côté non tourné vers le côté en contact avec la masse, et en particulier des ouvertures d'évacuation (39) qui entourent ces ouvertures de sortie.

11. Dispositif selon la revendication 10, **caractérisé en ce qu'**une pluralité d'ouvertures de sortie (38) sont reliées par des conduits (41, 42, 43) à un échangeur de chaleur (44) qui maintient la température du fluide, et **en ce qu'**une autre pluralité d'ouvertures d'évacuation (39) sont reliées par l'intermédiaire d'un ou de plusieurs conduits (40).

12. Dispositif pour la fabrication en continu de feuilles, de bandes, de plaques planes, essentiellement en plans parallèles, d'une longueur quelconque, dans lequel une masse plastique qui est apportée sur toute la largeur d'une fente d'entrée (6) formée par une bande supérieure sans fin (5) et par une bande inférieure (4) sans fin ainsi que par des rouleaux de renvoi et des rouleaux d'entraînement (2, 3), lesquelles bandes sont déplacées dans la même direction, a son épaisseur réduite entre les bandes (4, 5) et a sa température contrôlée, éventuellement abaissée, l'épaisseur des feuilles, des bandes ou des plaques étant mesurée et l'écart entre les bandes étant ajusté, **caractérisé en ce qu'**au moins une bande, de préférence les deux bandes (4, 5) sont déviées sur des rouleaux rotatifs de calibration (11, 12, 13, 14) disposés sensiblement l'un au-dessus de l'autre, qui sont disposés entre les rouleaux de renvoi et les rouleaux d'entraînement (2, 3) et au moins un, et en particulier les deux rouleaux de calibration (11, 12, 13, 14) sont déformés par l'intermédiaire d'éléments d'aspiration et/ou de poussée (25) disposés à l'intérieur de ces rouleaux le long d'une génératrice.

13. Procédé selon la revendication 12, **caractérisé en ce que** la valeur effective de l'écart entre les bandes (4, 5) transversalement par rapport à la direction d'avancement est mesurée en plusieurs endroits après les rouleaux de calibration (11, 12, 13, 14), et en cas d'écart par rapport aux valeurs de consigne, la distance entre les rouleaux de calibration (11, 12, 13, 14) et/ou la pression exercée par les éléments d'aspiration et/ou de poussée (25) sont modifiées.

14. Procédé selon la revendication 12 ou 13, **caractérisé en ce que** la valeur effective de l'épaisseur des feuilles, des bandes ou des plaques planes de longueur quelconque est mesurée transversalement à la direction de déplacement des bandes après leur sortie des bandes (4, 5), et en cas d'écart par rapport aux valeurs de consigne, la distance entre les rouleaux de calibration (11, 12, 13, 14) et/ou la pression exercée par les éléments d'aspiration et/ou de poussée (25) sont modifiées.

15. Procédé selon la revendication 12, 13 ou 14, **caractérisé en ce que** la valeur effective de l'épaisseur en des endroits prédestinés est intégrée par rapport au temps, en particulier sur 5 à 10 secondes, et est ensuite comparée à une valeur de consigne, et en cas d'écart, la distance des rouleaux de calibration (11, 12, 13, 14) et/ou la pression exercée par les éléments d'aspiration et/ou de poussée (25) sont modifiées.

16. Procédé selon l'une des revendications 12 à 15, **caractérisé en ce que** la valeur effective de la température des bandes (4, 5) dans la direction de déplacement des bandes est déterminée et comparée à des valeurs de consigne, et en cas d'écart, l'apport de chaleur et/ou de froid aux bandes (4, 5) et/ou aux cylindres de renvoi et/ou d'entraînement (2, 3) est modifié.

17. Procédé selon l'une des revendications 12 à 16, **caractérisé en ce que** la valeur effective de la température des bandes (4, 5) transversalement à la direction de déplacement des bandes (4, 5) est déterminée et comparée à des valeurs de consigne, et en cas d'écart, l'apport de chaleur et/ou de froid aux bandes (4, 5) et/ou aux cylindres de renvoi et/ou d'entraînement (2, 3) est modifié.

18. Procédé selon l'une des revendications 12 à 17, **caractérisé en ce que** lorsque la valeur effective de l'écart entre les bandes et/ou de l'épaisseur des bandes sans fin ou similaires est supérieure ou inférieure d'une valeur prédéterminée à la valeur de consigne, c'est d'abord l'écart entre les rouleaux de calibration (11, 12, 13, 14) qui est modifié.
